# EUROPÄISCHE PATENTSCHRIFT

(11) **EP 3 091 245 B1**
(45) Veröffentlichungstag und Bekanntmachung des Hinweises auf die Patenterteilung: **12.07.2017**
(21) Anmeldenummer: 15001376.1
(22) Anmeldetag: 07.05.2015
(51) Int. Cl.: F16D 41/10, F16D 43/02

(54) **KLEMMSPERRE MIT ZUSÄTZLICHER SICHERUNG**
CHUCK LOCKING DEVICE WITH ADDITIONAL SECURING
ARRÊT À SERRAGE DOTÉ D'UN ÉLÉMENT DE SÉCURITÉ SUPPLÉMENTAIRE

(43) Veröffentlichungstag der Anmeldung: 09.11.2016
(73) Patentinhaber: Lakeview Innovation Ltd., 6374 Buochs (CH)
(72) Erfinder: von Lehmann, Ernst, 79279 Vörstellen (DE)
(74) Vertreter: Grünecker Patent- und Rechtsanwälte PartG mbB

(56) Entgegenhaltungen:
- EP-A2- 1 122 390
- DE-U1- 9 101 110
- JP-B2- 3 971 051

## Beschreibung

Die vorliegende Erfindung betrifft eine Vorrichtung nach dem Oberbegriff des unabhängigen Anspruchs 1.

Eine gattungsgemäße Vorrichtung weist eine Antriebswelle, eine durch die Antriebswelle direkt angetriebene Abtriebswelle, ein Kupplungselement und eine Klemmsperre auf. Antriebswelle und Abtriebswelle sind koaxial zu dem Kupplungselement und drehbar gegenüber dem Kupplungselement gelagert. Die Klemmsperre wirkt zwischen dem Kupplungselement und der Antriebswelle oder der Abtriebswelle und blockiert dann, wenn von der Abtriebswelle ein Drehmoment auf die Antriebswelle eingeleitet wird. Die Klemmsperre ist hingegen gelöst, wenn von der Antriebswelle ein Drehmoment auf die Abtriebswelle eingeleitet wird. Die Klemmsperre weist zumindest ein Klemmelement auf, das zwischen einer ersten Klemmfläche der Antriebswelle bzw. Abtriebswelle und einer zweiten Klemmfläche des Kupplungselements angeordnet und von einer neutralen Stellung, in der keine Klemmung zwischen Klemmelement und erster Klemmfläche sowie zweiter Klemmfläche besteht, in eine Sperrstellung überführbar ist, in der zwischen dem Klemmelement und der ersten Klemmfläche sowie der zweiten Klemmfläche Selbsthemmung besteht, sodass die Klemmsperre blockiert.

Eine Vorrichtung der gattungsgemäßen Art ist beispielsweise aus DE 9101110 U1 bekannt. Diese Druckschrift beschreibt ein Getriebe zur Übertragung einer Drehbewegung in beiden Richtungen. Es wird beispielsweise zur Sitzverstellung von Kraftfahrzeugen eingesetzt. Antriebswelle und Abtriebswelle sind koaxial auf einer gemeinsamen Nabe gelagert und über einen spielbehafteten Formschluss miteinander verbunden, sodass ein direkter Antrieb der Abtriebswelle durch die Antriebswelle erfolgt. Solange von der Antriebswelle ein Drehmoment auf die Abtriebswelle eingeleitet wird, ist das Getriebe in beiden Richtungen frei drehbar. Bei Einleitung eines Drehmoments von der Abtriebswelle auf die Antriebswelle sperrt das Getriebe. Die Sperrung wird durch Selbsthemmung mehrerer Klemmkörper erreicht, die zwischen der Abtriebswelle und der feststehenden Nabe gelagert sind. Bei den Klemmkörpern handelt es sich um kleine Zylinder, die bei einer Drehung der Abtriebswelle gegenüber der Nabe von einer neutralen Stellung in eine Sperrstellung bewegt werden und dabei zwischen Abtriebswelle und Nabe abrollen. Die Klemmkörper werden dabei zusätzlich durch federnd elastische Elemente in die Sperrstellung gedrückt. Um die Selbsthemmung der Klemmsperre aufzuheben, wenn von der Antriebswelle ein Drehmoment auf die Abtriebswelle eingeleitet wird, ist die Antriebswelle mit entsprechenden Klauen versehen, die die Klemmelemente bei einer Drehung der Antriebswelle aus der Sperrstellung herausdrücken.

Bei der aus DE 9101110 U1 bekannten Vorrichtung besteht das Problem, dass relativ viele federnd elastische Elemente erforderlich sind. Zudem benötigt der konstruktive Aufbau entsprechend viel Bauraum. Zudem wird ein relativ großes Drehmoment benötigt, um die Klemmsperre zu entsperren.

Aus DE 102008021105 A1 ist ferner eine mechanische Bremse bekannt, bei der ebenfalls ein über die Antriebswelle eingeleitetes Drehmoment in beiden Drehrichtungen übertragen wird. Ein über die Abtriebswelle eingeleitetes Drehmoment verstärkt hingegen in beiden Drehrichtungen die Bremswirkung der mechanischen Bremse. Die Bremse weist einen Bremskegel auf, der gegen einen ebenfalls kegelförmigen Bremsflansch gedrückt wird, wobei der Bremskegel gegen die Federkraft einer Druckfeder axial aus dem Bremsflansch herausbewegt wird, wenn über die Antriebswelle ein Drehmoment eingeleitet wird. Der Verschiebemechanismus, der hierzu zum Einsatz kommt, hat Vorrang vor einem zweiten Verschiebemechanismus, der bei Einleitung eines Drehmoments über die Abtriebswelle dafür sorgt, dass der Bremskegel wieder in den Bremsflansch hineingedrückt wird. Die beiden Verschiebemechanismen umfassen jeweils mehrere Kugeln, die in sogenannten Kugellaufringen gelagert sind und bei einer Drehung der Antriebswelle bzw. Abtriebswelle eine axiale Bewegung des jeweiligen Verschiebemechanismus erzeugen.

Der konstruktive Aufbau der aus DE 102008021105 A1 bekannten mechanischen Bremse ist relativ aufwendig. Zudem wird die Bremswirkung lediglich durch das Zusammenspiel zwischen Bremskegel und Bremsflansch erzeugt. Die Bremswirkung wird nicht durch eine Selbsthemmung zwischen Klemmkörpern und entsprechenden Klemmflächen hervorgerufen. Bei Stillstand ist die Bremswirkung daher entsprechend gering.

Aufgabe der vorliegenden Erfindung ist es, die Vorrichtung der gattungsgemäßen Art zu verbessern. Insbesondere ist es Aufgabe der vorliegenden Erfindung, eine Vorrichtung der gattungsgemäßen Art mit zusätzlicher Sicherung der Klemmsperre und kompakter Bauweise anzugeben. Ferner soll zum Entsperren der Klemmsperre lediglich ein geringes Anfangsmoment erforderlich sein. Zum Sperren und Entsperren der Klemmsperre ist ferner eine lediglich geringe Verdrehung gewünscht.

Die Aufgabe wird gelöst durch die Merkmale des unabhängigen Anspruchs 1. Demnach liegt bei einer Vorrichtung der gattungsgemäßen Art dann eine erfindungsgemäße Lösung der Aufgabe vor, wenn die Klemmsperre ferner eine erste Kupplungsfläche der Antriebswelle bzw. Abtriebswelle sowie eine der ersten Kupplungsfläche gegenüberliegende zweite Kupplungsfläche des Kupplungselements aufweist, wobei erste Klemmfläche und zweite Klemmfläche derart ausgerichtet und ausgebildet sind, dass sie sich in Achsrichtung der Antriebswelle voneinander entfernen, wenn sich das Klemmelement zwischen erster und zweiter Klemmfläche von der neutralen Stellung in die Sperrstellung bewegt, und wobei erste Kupplungsfläche und zweite Kupplungsfläche derart ausgerichtet sind, dass sie sich in Achsrichtung der Antriebswelle aufeinander zu bewegen und in Eingriff gelangen, wenn sich das Klemmelement von der neutralen Stellung in die Sperrstellung bewegt.

Die erfindungsgemäße Lösung hat den Vorteil, dass die Blockierung der Klemmsperre durch die Selbsthemmung des Klemmelements zwischen erster und zweiter Klemmfläche hervorgerufen und zusätzlich durch den Eingriff der beiden Kupplungsflächen unterstützt wird. Dies erhöht die Sicherheit gegen Durchrutschen der Klemmsperre wesentlich. Zudem wird durch die erfindungsgemäße Lösung eine sehr kompakte Bauweise erreicht. Zum Entsperren der Klemmsperre wird lediglich ein relativ geringes Anfangsmoment benötigt. Darüber hinaus bietet die Erfindung den Vorteil, dass das Sperren und Entsperren der Klemmsperre lediglich eine geringe relative Verdrehung erfordert.

Antriebswelle und Abtriebswelle können mehrteilig aufgebaut sein. Dasselbe gilt auch für das Kupplungselement.

Vorteilhafte Ausgestaltungen der vorliegenden Erfindung sind Gegenstand der Unteransprüche.

In einer besonders bevorzugten Ausführungsform der vorliegenden Erfindung sind das Kupplungselement und die Antriebswelle bzw. Abtriebswelle, auf der sich die erste Klemmfläche und die erste Kupplungsfläche befinden, derart axial gegeneinander verspannt, dass die erste Klemmfläche und die zweite Klemmfläche in Achsrichtung der Antriebswelle gegen das dazwischen angeordnete Klemmelement vorgespannt sind. Dadurch wird sichergestellt, dass das Klemmelement an beiden Klemmflächen anliegt und bei einer relativen Verdrehung der beiden gegeneinander vorgespannten Bauteile von der neutralen Stellung in die Sperrstellung bewegt wird. Die Verspannung kann konstruktiv relativ einfach ausgeführt werden. Sofern mehrere Klemmelemente vorgesehen sind, wirkt die Vorspannung auf sämtliche Klemmelemente. Es ist daher nicht notwendig, für jedes Klemmelement jeweils ein eigenes federnd elastisches Element vorzusehen, wie es beispielsweise bei der Vorrichtung aus DE 9101110 U1 der Fall ist.

Besonders bevorzugt sind das Kupplungselement und die Antriebswelle bzw. Abtriebswelle mittels einer Feder gegeneinander verspannt, die konzentrisch zu den beiden gegeneinander verspannten Bauteilen angeordnet ist. Diese Ausführungsform gewährleistet einen relativ einfachen und kostengünstig zu realisierenden konstruktiven Aufbau. Besonders bevorzugt kann dabei eine Spiralfeder zum Einsatz kommen. Weiter ist es von besonderem Vorteil, wenn die Feder in einer zentralen Bohrung zumindest eines der beiden gegeneinander verspannten Bauteile angeordnet ist, wobei zwischen zumindest einem Ende der Feder und dem Kupplungselement oder der Antriebswelle bzw. Abtriebswelle eine Kugel gelagert ist. Dadurch ist eine relative Verdrehung der beiden gegeneinander verspannten Bauteile ohne weiteres möglich, wobei Reibungsverluste gering gehalten werden. Vorzugsweise ist die Kugel in einem Kegelsitz des entsprechenden Bauteils aufgenommen.

In einer weiteren besonders bevorzugten Ausführungsform der vorliegenden Erfindung sind 1. Kupplungsfläche und 2. Kupplungsfläche jeweils Kegelflächen. Dadurch wird eine besonders hohe Klemm Wirkung erzielt. Ferner gewährleistet diese Ausführungsform, dass durch den Eingriff der beiden Kegelflächen selbst dann eine Unterstützung der Klemmsperre erfolgt, wenn die Fertigungstoleranzen relativ groß angesetzt werden.

In einer weiteren besonders bevorzugten Ausführungsform der vorliegenden Erfindung handelt es sich bei dem zumindest einen Klemmelement um eine Kugel. Auch diese Ausführungsform gewährleistet einen relativ einfachen konstruktiven Aufbau und eine einfache und kostengünstige Fertigung der erfindungsgemäßen Vorrichtung. Die Kugel rollt bei ihrer Bewegung von der neutralen Stellung in die Sperrstellung auf der ersten Klemmfläche zumindest entlang einer ersten Rollbahn und auf der zweiten Klemmfläche zumindest entlang einer zweiten Rollbahn ab. Es wird darauf hingewiesen, dass anstatt einer Kugel grundsätzlich auch andere Klemmkörper zum Einsatz kommen können. Vorzugsweise handelt es sich dabei um rotationssymmetrische Wälzkörper.

Sofern eine Kugel als Klemmelement zum Einsatz kommt, ist vorteilhafter Weise vorgesehen, dass ein erster Anlagepunkt zwischen Klemmelement und Antriebswelle bzw. Abtriebswelle und ein zweiter Anlagepunkt zwischen Klemmelement und Kupplungselement in Achsrichtung der Antriebswelle voneinander beabstandet sind. Bei entsprechender Ausgestaltung der ersten und zweiten Klemmflächen wird dadurch auf einfache Weise erreicht, dass sich erste Klemmfläche und zweite Klemmfläche axial voneinander entfernen, wenn sich die Kugel von der neutralen Stellung in die Sperrstellung bewegt. Damit Selbsthemmung auch alleine durch die Blockierung der Kugel eintreten kann, sind der erste Anlagepunkt und der zweite Anlagepunkt vorteilhafterweise auch radial voneinander beabstandet. Die Anlagepunkte liegen auf den zuvor erwähnten Rollbahnen, entlang derer sich die Kugel von der neutralen Stellung in die Sperrstellung bewegt.

In einer weiteren bevorzugten Ausführungsform der vorliegenden Erfindung sind die erste Klemmfläche und die zweite Klemmfläche zumindest teilweise durch Kegelflächen gebildet, wobei ein mittlerer Radius der ersten Klemmfläche und/oder der zweiten Klemmfläche von der neutralen Stellung des Klemmkörpers zur Sperrstellung hin variiert. Die Variation des mittleren Radius kann derart gewählt werden, dass die resultierende Klemmfläche zumindest abschnittsweise eben ist und tangential zu einer Kegelfläche mit konstantem Radius verläuft. Besonders bevorzugt ist eine der beiden Klemmflächen eine Kegelfläche mit konstantem Radius, wohingegen die andere der beiden Klemmflächen eben ist und tangential zu einer Kegelfläche mit konstantem Radius verläuft. Diese Ausführungsform gewährleistet eine einfache und präzise Fertigung. Weiter bevorzugt sind die erste Klemmfläche und/oder die zweite Klemmfläche V-förmig ausgebildet. Dadurch wird erreicht, dass der relative Drehwinkel zwischen dem Kupplungselement und der Antriebswelle bzw. Abtriebswelle, welcher notwendig ist, um Selbsthemmung zu erreichen, sehr klein gehalten werden kann. Die Klemmsperre kann dadurch sehr schnell aktiviert werden.

In einer weiteren besonders bevorzugten Ausführungsform der vorliegenden Erfindung kann die Klemmsperre in beiden Drehrichtungen blockieren, wobei die erste Klemmfläche und die zweite Klemmfläche derart ausgebildet sind, dass sich das Klemmelement aus der neutralen Stellung in Abhängigkeit der Drehrichtung entweder in eine erste Sperrstellung oder in eine zweite Sperrstellung bewegen kann. Erste und zweite Klemmfläche sind dabei vorzugsweise in Bezug auf die neutrale Stellung des Klemmelements symmetrisch ausgebildet. Bei dieser Ausführungsform wird eine Drehbewegung der Antriebswelle in beiden Richtungen auf die Abtriebswelle übertragen, wobei die Klemmsperre in beiden Richtungen blockiert, sofern ein positives oder negatives Drehmoment von der Abtriebswelle auf die Antriebswelle eingeleitet wird.

In einer weiteren bevorzugten Ausführungsform der vorliegenden Erfindung sind mehrere Klemmelemente und entsprechend mehrere erste und zweite Klemmflächen vorgesehen. Dies gewährleistet eine zuverlässige Funktion der Klemmsperre. Besonders bevorzugt sind die Klemmelemente dabei in Bezug auf die Achse des Kupplungselements gleichmäßig voneinander beabstandet über den Umfang verteilt angeordnet.

In einer weiteren bevorzugten Ausführungsform der vorliegenden Erfindung wirkt die Klemmsperre zwischen Kupplungselement und Abtriebswelle, wobei sich die erste Klemmfläche und die erste Kupplungsfläche auf der Abtriebswelle befinden. Bei dieser Ausführungsform ergibt sich ein einfacher konstruktiver Aufbau.

In einer weiteren besonders bevorzugten Ausführungsform der vorliegenden Erfindung handelt es sich bei dem Kupplungselement um ein Getriebeelement und vorzugsweise um ein Zahnrad eines Getriebes. Bei dieser Ausführungsform kann die Klemmsperre als Getriebesperre zum Einsatz kommen. Bei einer Blockierung der Klemmsperre drehen sich dabei sowohl die Antriebswelle als auch die Abtriebswelle gegenüber dem Getriebeelement nicht. Bei dem Kupplungselement kann es sich hingegen aber auch um ein feststehendes Bauteil handeln. Beispielsweise kann das Kupplungselement als feststehende Nabe ausgebildet sein. In diesem Fall wirkt die Klemmsperre als reine Arretierung von Antriebs- bzw. Abtriebswelle.

Die vorliegende Erfindung stellt auch ein Getriebe mit der erfindungsgemäßen Vorrichtung bereit, wobei die Klemmsperre dabei eine Getriebesperre des Getriebes bildet. Ferner stellt die Erfindung einen Antrieb mit einem Elektromotor und einem daran angesetzten Getriebe bereit. Bei dem Getriebe handelt es sich vorzugsweise um ein Untersetzungsgetriebe. Ein Ausführungsbeispiel der vorliegenden Erfindung wird im Folgenden anhand von Zeichnungen näher erläutert.

Es zeigen:
- Figur 1:: eine erfindungsgemäße Vorrichtung in einer teilweise geschnittenen Schrägansicht,
- Figur 2:: die erfindungsgemäße Vorrichtung aus Figur 1 in einem Längsschnitt,
- Figur 3:: den Ausschnitt III aus Figur 2 im Detail,
- Figur 4:: eine Detailansicht der Abtriebswelle der erfindungsgemäßen Vorrichtung aus den Figuren 1 bis 3 zur weiteren Erläuterung der Detailansicht aus Figur 3,
- Figur 5:: einen Querschnitt durch die erfindungsgemäße Vorrichtung entlang der in Figur 2 eingezeichneten Schnittlinien V,
- Figur 6:: den Ausschnitt VI aus Figur 5 im Detail,
- Figur 7:: einen Querschnitt durch die erfindungsgemäße Vorrichtung entlang der in Figur 2 eingezeichneten Schnittlinien VII,
- Figur 8:: den Ausschnitt VIII aus Figur 7 im Detail.

Für die folgenden Ausführungen gilt, dass gleiche Teile durch gleiche Bezugszeichen bezeichnet sind. Sofern in einer Zeichnung Bezugszeichen enthalten sind, auf die in der zugehörigen Figurenbeschreibung nicht näher eingegangen wird, so wird auf vorangehende oder nachfolgende Figurenbeschreibungen Bezug genommen.

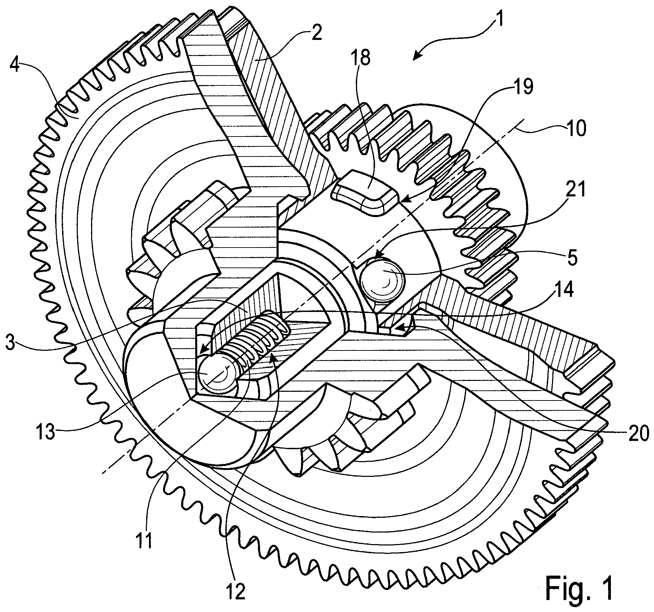

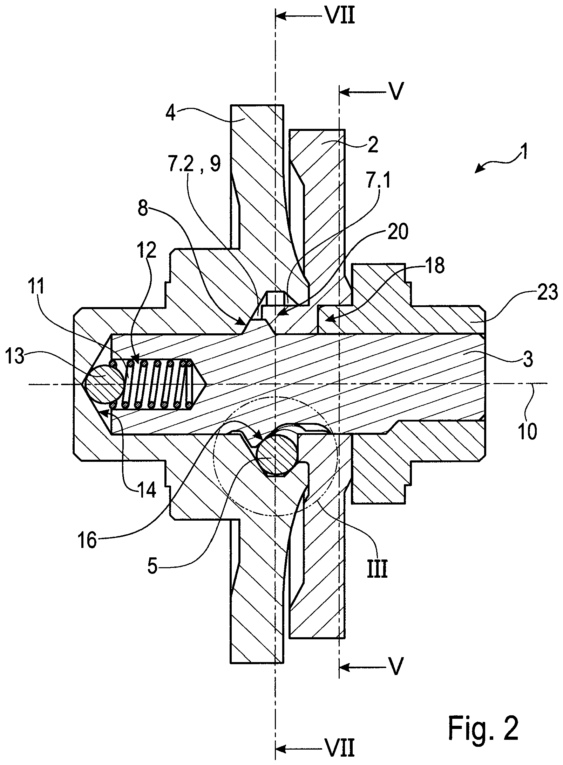

Die Figuren 1 und 2 zeigen ein Ausführungsbeispiel einer erfindungsgemäßen Vorrichtung 1. In Figur 1 ist die Vorrichtung in einer teilweise geschnittenen Schrägansicht dargestellt. Figur 2 zeigt dieselbe Vorrichtung im Längsschnitt.

Die Vorrichtung weist eine Antriebswelle 2 und eine von der Antriebswelle 2 direkt angetriebene Abtriebswelle 3 auf. Die Antriebswelle 2 ist hier als Zahnrad ausgeführt, über welches ein Drehmoment eines vorgeschatlteten, parallel angeordneten Antriebsstrangs eingeleitet werden kann. Antriebswelle 2 und Abtriebswelle 3 sind koaxial zueinander angeordnet und um eine gemeinsame Achse 10 drehbar gelagert. Die Lagerung ist in den Figuren nicht näher dargestellt. Wie insbesondere aus Figur 2 deutlich wird, ist die Abtriebswelle 3 in einer zentralen Bohrung der Antriebswelle 2 angeordnet. Die Antriebswelle 2 um gibt die Abtriebswelle 3 somit zumindest über einen gewissen axialen Bereich.

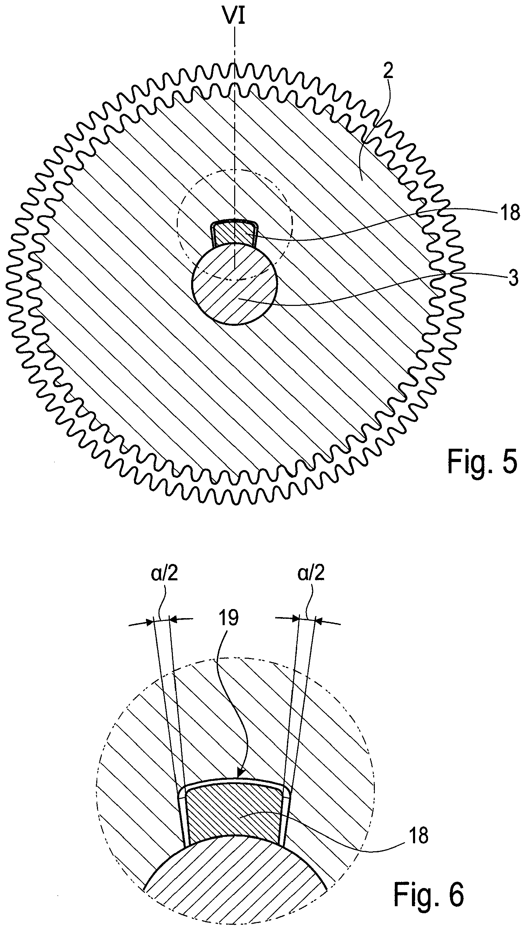

Die Abtriebswelle 3 ist aus fertigungstechnischen Gründen mehrteilig aufgebaut und umfasst insbesondere das aufgesteckte Abtriebszahnrad 23, welches in Figur 2 deutlich zu erkennen ist. Der direkte Antrieb zwischen Antriebswelle 2 und Abtriebswelle 3 wird durch einen spielbehafteten Formschluss sichergestellt. Die Abtriebswelle bzw. das Abtriebszahnrad 23 weist hierzu einen abstehenden Zapfen 18 auf, der in die in den Figuren 1 und 6 gezeigte Ausnehmung 19 der Antriebswelle 2 eingreift. Figur 6 zeigt, dass zwischen dem Zapfen 18 und der Ausnehmung 19 in Umfangsrichtung ein gewisses Spiel besteht. Das Spiel entspricht einem relativen Drehwinkel α, ohne dass es zu einem Eingriff in Umfangsrichtung kommt. Figur 6 zeigt eine Mittelstellung, aus welcher heraus die Antriebswelle jeweils um die Hälfte des Winkels α im oder gegen den Uhrzeigersinn gedreht werden muss, bis es zu dem Eingriff kommt.

Ebenfalls koaxial zu Antriebswelle 2 und Abtriebswelle 3 ist ein gestuftes Zahnrad 4 eines nicht weiter dargestellten Getriebes angeordnet. Das Zahnrad 4 weist eine zentrale Bohrung auf, in welcher der in Figur 2 links dargestellte Teil der Abtriebswelle 3 aufgenommen ist. Das Zahnrad 4 ist gegenüber Antriebswelle 2 und Abtriebswelle 3 drehbar gelagert.

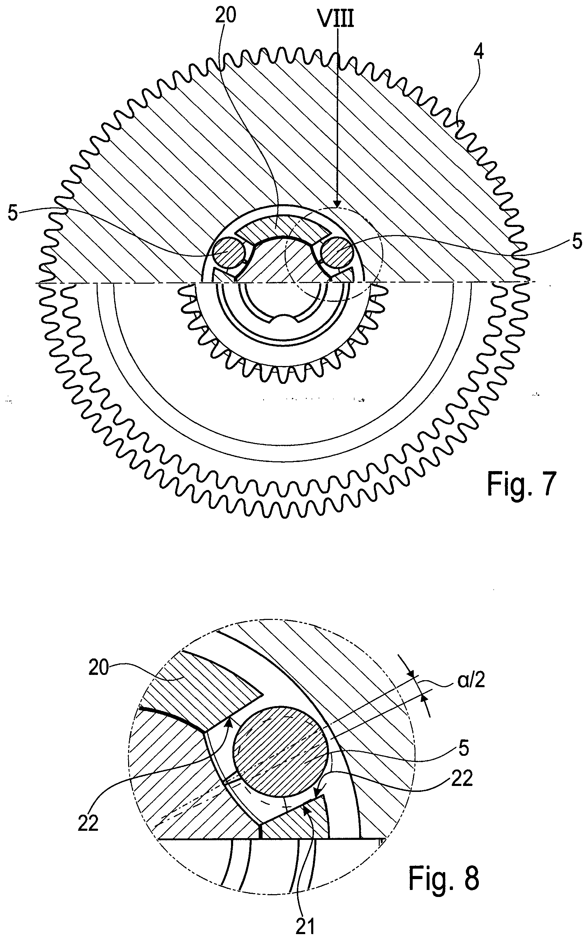

Wie im Folgenden näher erläutert wird, umfasst die erfindungsgemäße Vorrichtung eine Klemmsperre, die zwischen der Abtriebswelle 3 und dem Zahnrad 4 wirkt und dann blockiert, wenn von der Abtriebswelle ein Drehmoment auf die Antriebswelle eingeleitet wird. Die Klemmsperre ist hingegen gelöst, wenn von der Antriebswelle ein Drehmoment auf die Abtriebswelle eingeleitet wird. Die Klemmsperre ist grundsätzlich nach dem Prinzip einer Klemmkugelsperre aufgebaut. Hierzu sind zwischen entsprechenden Klemmflächen von Abtriebswelle 3 und Zahnrad 4 mehrere Kugeln 5 als Klemmkörper angeordnet. Wie aus Figur 7 hervorgeht, umfasst die Klemmsperre bei dem gezeigten Ausführungsbeispiel drei Kugeln 5, die im gleichen Abstand zueinander über den Umfang verteilt angeordnet sind. Es wird darauf hingewiesen, dass je nach Bedarf auch mehr oder weniger Kugeln als Klemmelemente vorgesehen sein können.

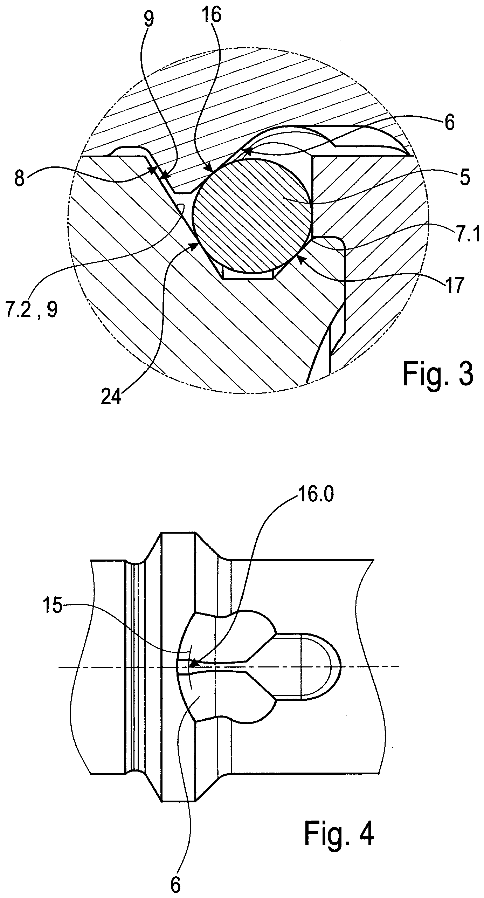

Die Anordnung der Kugeln 5 zwischen den entsprechenden Klemmflächen von Abtriebswelle 3 und Zahnrad 4 ist am besten in den Figuren 3 und 4 zu erkennen. Figur 3 zeigt den in Figur 2 eingezeichneten Ausschnitt III im Detail. Figur 4 zeigt eine Detailansicht der Abtriebswelle 3, in der die entsprechende Klemmfläche 6 der Abtriebswelle näher dargestellt ist. In Figur 3 ist zu erkennen, dass die Klemmfläche des Zahnrads 4 durch eine V-förmige Nut gebildet wird. Die Nut umfasst die beiden Kegelflächen 7.1 und 7.2. Die Kugeln 5 können in der V-förmigen Nut im Wesentlichen frei abrollen. Der Kegelfläche 7.1 unmittelbar gegenüber liegt die Klemmfläche 6 der Abtriebswelle, welche im Wesentlichen durch einen Spezialfall einer Kegelfläche gebildet wird. Wie weiter unten noch näher erläutert wird, variiert der mittlere Radius der Klemmfläche 6 in Umfangsrichtung, so dass die Klemmfläche 6 zwei ebene Flächenabschnitte aufweist, die jeweils tangential zu einer Kegelfläche mit konstantem Radius verlaufen. In Figur 3 ist zu erkennen, dass die Kugel 5 an der Klemmfläche 6 in einem ersten Anlagepunkt 16 anliegt, wobei zwischen der Kugel 5 und der Kegelfläche 7.1 der V-förmigen Nut ein zweiter Anlagepunkt 17 besteht. Aufgrund der kegelförmigen Klemmflächen sind die beiden Anlagepunkte 16 und 17 sowohl axial als auch radial voneinander beanstandet. Da die Klemmfläche des Zahnrads 4 als V-förmige Nut ausgebildet ist, liegt die Kugel 5 zusätzlich in einem dritten Anlagepunkt 24 an der Kegelfläche 7.2 der V-förmigen Nut an. Alternativ ist es aber hierbei auch möglich, dass die Kugel nicht, oder nur phasenweise auf ihrer Rollbahn in einem dritten Anlagepunkt 24 an der Kegelfläche 7.2 anliegt.

Figur 4 zeigt eine Detailansicht der Abtriebswelle 3, in der die Klemmfläche 6 näher dargestellt ist. In der Darstellung ist ferner die Rollbahn 15 angedeutet, die sich durch eine Verbindung sämtlicher möglichen Anlagepunkte 16 zwischen Klemmfläche 6 und Kugel 5 ergibt. In dem in Figur 3 gezeigten Fall befindet sich die Kugel 5 in einer neutralen Ausgangsstellung. Der Anlagepunkt zwischen Kugel 5 und Klemmfläche 6 entspricht dabei dem mittleren Anlagepunkt 16.0. Bei einer Drehung des Zahnrads 4 gegenüber der Abtriebswelle 3 rollt die Kugel 5 sowohl in der V-förmigen Nut als auch auf der Klemmfläche 6 ab. Je nach Drehrichtung wandert der Anlagepunkt 16 zwischen Kugel 5 und Klemmfläche 6 dabei von der Position 16.0 im oder gegen den Uhrzeigersinn entlang der Rollbahn 15. Wie bereits zuvor erwähnt, weist die Klemmfläche 6 einen mittleren Radius auf, der in Umfangsrichtung variiert. Bezogen auf die Rollbahn 15 nimmt der mittlere Radius der Klemmfläche 6 in beiden Richtungen kontinuierlich zu. Bei dem dargestellten Ausführungsbeispiel wurde die Variation des Radius derart gewählt, dass sich zwei ebene Flächenabschnitte ergeben, die jeweils tangential zu einer Kegelfläche mit konstantem Radius verlaufen. Die Rollbahn 15 endet daher in beiden Richtungen in einem Punkt, in welchem zwischen den Klemmflächen 7.1,7.2 und 6 sowie der Kugel 5 Selbsthemmung eintritt. Die Kugel 5 befindet sich dabei in einer Sperrstellung. Dadurch blockiert die Klemmsperre und bewirkt, dass eine relative Drehung zwischen Zahnrad 4 und Abtriebswelle nicht mehr möglich ist. Die Klemmsperre dient damit als Getriebesperre des nicht näher dargestellten Getriebes.

Um zu verhindern, dass die Klemmsperre blockiert, wenn von der Antriebswelle 2 ein Drehmoment auf die Abtriebswelle eingeleitet wird, sorgt ein Eingriff zwischen der Antriebswelle 2 und den Kugeln 5 dafür, dass die Kugeln die Sperrstellung nicht erreichen können. Die Antriebswelle 2 verfügt hierfür über den in den Figuren 1,2, 7 und 8 dargestellten axial abstehenden Ringflansch 20, der drei Ausnehmungen 21 aufweist, in welchen die drei Kugeln 5 aufgenommen sind. Die Ausnehmungen sind in Umfangsrichtung betrachtet jeweils durch zwei Kanten 22 des Ringsflansch 20 begrenzt. Die Kanten 22 sind in Figur 8 dargestellt. Sie sorgen dafür, dass die Kugeln 5 aus ihrer Sperrstellung herausgedrückt werden, sobald von der Antriebswelle 2 ein Drehmoment auf die Abtriebswelle 3 eingeleitet wird. Aufgrund der symmetrischen Ausgestaltung erfolgt dies drehrichtungsunabhängig.

Damit die Kugeln 5 stets an den Klemmflächen von Zahnrad 4 bzw. Abtriebswelle 3 anliegen, ist das Zahnrad 4 gegenüber der Abtriebswelle 3 axial verspannt. Die axiale Vorspannung wird durch eine Spiralfeder 11 erzeugt, die in den Figuren 1 und 2 dargestellt ist. Die Spiralfeder 11 ist in einer zentralen Sacklochbohrung 12 der Abtriebswelle 3 aufgenommen. Am in Figur 2 dargestellten linken Ende der Spiralfeder 11 ist zwischen der Spiralfeder und einem Kegelsitz 14 des Zahnrads 4 eine Lagerkugel 13 angeordnet, die dafür sorgt, dass trotz axialer Vorspannung nur geringe Reibungsverluste auftreten. Die axiale Verspannung wirkt auf sämtliche Klemmkörper der Klemmsperre, bei dem beschriebenen Ausführungsbeispiel somit auf alle drei Kugeln 5. Die Verspannung bewirkt, dass die Kugeln 5 vorzugsweise in der neutralen Stellung gehalten werden, solange kein Drehmoment an Antriebswelle 2 bzw. Abtriebswelle 3 anliegt.

Erfindungsgemäß wird die Blockierung der Klemmsperre durch den Eingriff zweier Kupplungsflächen unterstützt. Die beiden Kupplungsflächen befinden sich ebenfalls auf der Abtriebswelle 3 und dem Zahnrad 4. Es handelt sich um die in Figur 3 dargestellten miteinander korrespondierenden Kegelflächen 8 und 9. Die erste Kupplungsfläche 8 befindet sich dabei auf der Abtriebswelle 3. Die gegenüberliegende zweite Kupplungsfläche 9 befindet sich auf der Seite des Zahnrads 4. Sie ist vorzugsweise eine Fortsetzung der Kegelfläche 7.2 der V-förmigen Nut, in welcher die drei Kugeln 5 aufgenommen sind. Kegelfläche 7.2 und Kegelfläche 9 gehen somit nahtlos ineinander über.

In dem Fall, der in Figur 3 dargestellt ist, befinden sich die Kugeln jeweils in der neutralen Stellung, sodass keine Selbsthemmung zwischen den Kugeln und den jeweiligen Klemmflächen der Antriebswelle und des Zahnrad herrscht. In diesem Fall besteht zwischen den beiden Kupplungsflächen 8 und 9 ein geringer Spalt. Die beiden Kupplungsflächen sind daher nicht miteinander im Eingriff. Sobald sich die Kugeln 5 entlang der in Figur 4 gezeigten Rollbahn 15 von der neutralen Stellung in eine der jeweils möglichen beiden Sperrstellungen bewegen, werden die beiden Flächen 6 und 7.1 entgegen der Federkraft der Spiralfeder 11 axial auseinandergedrückt, sodass es zu einem axialen Versatz zwischen Abtriebswelle 3 und Zahnrad 4 kommt. Dies führt dazu, dass der Spalt zwischen der Kupplungsfläche 8 und der Kupplungsfläche 9 geschlossen wird. Die beiden Kupplungsflächen kommen somit in Eingriff und unterstützen durch die dabei generierten Haftkräfte die Blockierung der Klemmsperre.

Anstatt des gestuften Zahnrads 4 kann beispielsweise auch ein feststehendes Bauteil als Kupplungselement vorgesehen sein. In diesem Fall wirkt die Klemmsperre als reine Drehsperre für die Antriebswelle 2 bzw. die Abtriebswelle 3. Bei dem beschriebenen Ausführungsbeispiel wirkt die Klemmsperre als Getriebesperre, sodass eine Drehung von Antriebswelle 2 und Abtriebswelle 3 gegenüber dem Zahnrad 4 des nicht dargestellten Getriebes unterbunden wird.

## Patentansprüche

1. Vorrichtung (1) mit einer Antriebswelle (2), einer durch die Antriebswelle (2) direkt angetriebenen Abtriebswelle (3), einem Kupplungselement (4), und mit einer Klemmsperre, wobei Antriebswelle (2) und Abtriebswelle (3) koaxial zu dem Kupplungselement (4) und drehbar gegenüber dem Kupplungselement (4) gelagert sind, wobei die Klemmsperre zwischen dem Kupplungselement (4) und der Antriebswelle (2) oder der Abtriebswelle (3) wirkt und dann blockiert, wenn von der Abtriebswelle (3) ein Drehmoment auf die Antriebswelle (2) eingeleitet wird, und wobei die Klemmsperre gelöst ist, wenn von der Antriebswelle (2) ein Drehmoment auf die Abtriebswelle (3) eingeleitet wird, wobei die Klemmsperre zumindest ein Klemmelement (5) aufweist, das zwischen einer ersten Klemmfläche (6) der Antriebswelle (2) bzw. Abtriebswelle (3) und einer zweiten Klemmfläche (7.1, 7.2) des Kupplungselements (4) angeordnet und von einer neutralen Stellung, in der keine Klemmung zwischen Klemmelement (5) und erster Klemmfläche (6) sowie zweiter Klemmfläche (7.1, 7.2) besteht, in eine Sperrstellung überführbar ist, in welcher zwischen dem Klemmelement (5) und der ersten Klemmfläche (6) sowie der zweiten Klemmfläche (7.1, 7.2) Selbsthemmung besteht, so dass die Klemmsperre blockiert, **dadurch gekennzeichnet, dass** die Klemmsperre ferner eine erste Kupplungsfläche (8) der Antriebswelle (2) bzw. Abtriebswelle (3) sowie eine der ersten Kupplungsfläche (8) gegenüberliegende zweite Kupplungsfläche (9) des Kupplungselements (4) aufweist, wobei erste Klemmfläche (6) und zweite Klemmfläche (7.1) derart ausgerichtet und ausgebildet sind, dass sie sich in Achsrichtung der Antriebswelle (2) voneinander entfernen, wenn sich das Klemmelement (5) zwischen erster und zweiter Klemmfläche von der neutralen Stellung in die Sperrstellung bewegt, und wobei erste Kupplungsfläche (8) und zweite Kupplungsfläche (9) derart ausgerichtet sind, dass sie sich in Achsrichtung der Antriebswelle (2) aufeinander zu bewegen und in Eingriff gelangen, wenn sich das Klemmelement (5) von der neutralen Stellung in die Sperrstellung bewegt.

2. Vorrichtung (1) nach Anspruch 1, **dadurch gekennzeichnet, dass** das Kupplungselement (4) und die Antriebswelle (2) bzw. Abtriebswelle (3), auf der sich die erste Klemmfläche (6) und die erste Kupplungsfläche (8) befinden, derart axial gegeneinander verspannt sind, dass erste Klemmfläche (6) und zweite Klemmfläche (7.1) in Achsrichtung der Antriebswelle (2) gegen das dazwischen angeordnete Klemmelement (5) vorgespannt sind.

3. Vorrichtung (1) nach Anspruch 2, **dadurch gekennzeichnet, dass** das Kupplungselement (4) und die Antriebswelle (2) bzw. Abtriebswelle (3) mittels einer Feder (11), vorzugsweise mittels einer Spiralfeder (11), gegeneinander verspannt sind, die konzentrisch zu den beiden gegeneinander verspannten Bauteilen angeordnet ist.

4. Vorrichtung (1) nach Anspruch 3, **dadurch gekennzeichnet, dass** die Feder (11) in einer zentralen Bohrung (12) zumindest eines der beiden gegeneinander verspannten Bauteile angeordnet ist, wobei zwischen zumindest einem Ende der Feder (11) und dem Kupplungselement (4) oder der Antriebswelle (2) bzw. Abtriebswelle (3) eine Kugel (13) gelagert ist.

5. Vorrichtung (1) nach einem der Ansprüche 1 bis 4, **dadurch gekennzeichnet, dass** erste Kupplungsfläche (8) und zweite Kupplungsfläche (9) Kegelflächen sind.

6. Vorrichtung (1) nach einem der Ansprüche 1 bis 5, **dadurch gekennzeichnet, dass** das Klemmelement (5) eine Kugel ist.

7. Vorrichtung (1) nach Anspruch 6, **dadurch gekennzeichnet, dass** ein erster Anlagepunkt (16) zwischen Klemmelement (5) und Antriebswelle (2) bzw. Abtriebswelle (3) und ein zweiter Anlagepunkt (17) zwischen Klemmelement (5) und Kupplungselement (4) in Achsrichtung der Antriebswelle (2) voneinander beabstandet sind.

8. Vorrichtung (1) nach Anspruch 6 oder 7, **dadurch gekennzeichnet, dass** die erste Klemmfläche (6) und die zweite Klemmfläche (7.1, 7.2) zumindest teilweise durch Kegelflächen gebildet sind, wobei ein mittlerer Radius der ersten Klemmfläche und/oder der zweiten Klemmfläche von der neutralen Stellung des Klemmkörpers zur Sperrstellung hin variiert.

9. Vorrichtung (1) nach Anspruch 8, **dadurch gekennzeichnet, dass** die erste Klemmfläche (6) und/oder die zweite Klemmfläche (7.1, 7.2) V-förmig ausgebildet sind.

10. Vorrichtung (1) nach einem der Ansprüche 1 bis 9, **dadurch gekennzeichnet, dass** die Klemmsperre in beiden Drehrichtungen blockieren kann, wobei die erste Klemmfläche (6) und die zweite Klemmfläche (7.1, 7.2) derart ausgebildet sind, dass sich das Klemmelement (5) aus der neutralen Stellung in Abhängigkeit der Drehrichtung entweder in eine erste Sperrstellung oder in eine zweite Sperrstellung bewegen kann.

11. Vorrichtung (1) nach einem der Ansprüche 1 bis 10, **dadurch gekennzeichnet, dass** mehrere Klemmelemente (5) und entsprechend mehrere erste und zweite Klemmflächen (6, 7.1, 7.2) vorgesehen sind.

12. Vorrichtung (1) nach einem der Ansprüche 1 bis 11, **dadurch gekennzeichnet, dass** die Klemmsperre zwischen Kupplungselement (4) und Abtriebswelle (3) wirkt, wobei sich die erste Klemmfläche (6) und die erste Kupplungsfläche (8) auf der Abtriebswelle (3) befinden.

13. Vorrichtung (1) nach einem der Ansprüche 1 bis 12, **dadurch gekennzeichnet, dass** das Kupplungselement (4) ein Getriebeelement, vorzugsweise ein Zahnrad eines Getriebes ist.

14. Getriebe mit einer Vorrichtung (1) nach Anspruch 13, **dadurch gekennzeichnet, dass** die Klemmsperre eine Getriebesperre des Getriebes bildet.

15. Antrieb mit einem Elektromotor und einem daran angesetzten Getriebe nach Anspruch 14.

## Claims

1. A device (1) comprising a driving shaft (2), a driven shaft (3) driven directly by the driving shaft (2), a coupling element (4) and a clamp lock, the driving shaft (2) and the driven shaft (3) being supported such that they are coaxial with the coupling element (4) and rotatable relative to the coupling element (4), wherein the clamp lock acts between the coupling element (4) and the driving shaft (2) or the driven shaft (3) and locks when a torque is transmitted from the driven shaft (3) to the driving shaft (2), and wherein the clamp lock is released when a torque is transmitted from the driving shaft (2) to the driven shaft (3), wherein the clamp lock comprises at least one clamping element (5), which is arranged between a first clamping surface (6) of the driving shaft (2) or the driven shaft (3) and a second clamping surface (7.1, 7.2) of the coupling element (4) and which is adapted to be transferred from a neutral position, at which there is no clamping effect between the clamping element (5) and the first clamping surface (6) as well as the second clamping surface (7.1, 7.2), to a locking position, at which a self-locking effect occurs between the clamping element (5) and the first clamping surface (6) as well as the second clamping surface (7.1, 7.2), so that the clamp lock will lock, **characterized in that** the clamp lock additionally comprises a first coupling surface (8) of the driving shaft (2) or the driven shaft (3) as well as a second coupling surface (9) of the coupling element (4), said second coupling surface (9) being positioned in opposed relationship with said first coupling surface (8), wherein the first clamping surface (6) and the second clamping surface (7.1) are oriented and configured such that they move away from one another in the axial direction of the driving shaft (2), when the clamping element (5) between the first and second clamping surfaces moves from the neutral position to the locking position, and wherein the first coupling surface (8) and the second coupling surface (9) are oriented such that they move towards one another in the axial direction of the driving shaft (2) and enter into engagement with one another, when the clamping element (5) moves from the neutral position to the locking position.

2. The device (1) according to claim 1, **characterized in that** the coupling element (4) and the driving shaft (2) or the driven shaft (3), which have provided thereon the first clamping surface (6) and the first coupling surface (8), are axially tensioned against one another in such a way that the first clamping surface (6) and the second clamping surface (7.1) are biased in the axial direction of the driving shaft (2) against the clamping element (5) arranged therebetween.

3. The device (1) according to claim 2, **characterized in that** the coupling element (4) and the driving shaft (2) or the driven shaft (3) are tensioned against one another by means of a spring (11), preferably a coil spring (11), which is arranged concentrically with the two components that are tensioned against one another.

4. The device (1) according to claim 3, **characterized in that** the spring (11) is arranged in a central bore (12) of at least one of the two components that are tensioned against one another, a ball (13) being supported between at least one end of the spring (11) and the coupling element (4) or the driving shaft (2) or the driven shaft (3).

5. The device (1) according to one of the claims 1 to 4, **characterized in that** the first coupling surface (8) and the second coupling surface (9) are conical surfaces.

6. The device (1) according to one of the claims 1 to 5, **characterized in that** the clamping element (5) is a ball.

7. The device (1) according to claim 6, **characterized in that** a first contact point (16) between the clamping element (5) and the driving shaft (2) or the driven shaft (3) and a second contact point (17) between the clamping element (5) and the coupling element (4) are spaced apart in the axial direction of the driving shaft (2).

8. The device (1) according to claim 6 or 7, **characterized in that** the first clamping surface (6) and the second clamping surface (7.1, 7.2) are, at least partially, defined by conical surfaces, a mean radius of the first clamping surface and/or of the second clamping surface varying from the neutral position of the clamping element towards the locking position.

9. The device (1) according to claim 8, **characterized in that** the first clamping surface (6) and/or the second clamping surface (7.1, 7.2) are V-shaped.

10. The device (1) according to one of the claims 1 to 9, **characterized in that** the clamp lock is able to lock in both directions of rotation, the first clamping surface (6) and the second clamping surface (7.1, 7.2) being configured such that, depending on the direction of rotation, the clamping element (5) can move from the neutral position either to a first locking position or to a second locking position.

11. The device (1) according to one of the claims 1 to 10, **characterized in that** a plurality of clamping elements (5) and, accordingly, a plurality of first and second clamping surfaces (6, 7.1, 7.2) are provided.

12. The device (1) according to one of the claims 1 to 11, **characterized in that** the clamp lock acts between the coupling element (4) and the driven shaft (3), the first clamping surface (6) and the first coupling surface (8) being located on the driven shaft (3).

13. The device (1) according to one of the claims 1 to 12, **characterized in that** the coupling element (4) is a gear unit element, preferably a gear of a gear unit.

14. The device (1) according to claim 13, **characterized in that** the clamp lock defines a gear lock of the gear unit.

15. A drive comprising an electric motor and a gear unit according to claim 14 attached thereto.

## Revendications

1. Dispositif (1) comprenant un arbre d'entraînement menant (2), un arbre d'entraînement mené (3) entraîné directement par l'arbre d'entraînement menant (2), un élément d'accouplement (4), et un système de blocage à serrage, dispositif
dans lequel l'arbre d'entraînement menant (2) et l'arbre d'entraînement mené (3) sont montés de manière coaxiale à l'élément d'accouplement (4) et de façon rotative par rapport à l'élément d'accouplement (4),
dans lequel le système de blocage à serrage agit entre l'élément d'accouplement (4) et l'arbre d'entraînement menant (2) ou l'arbre d'entraînement mené (3), et bloque lorsqu'un couple est appliqué par l'arbre d'entraînement mené (3) sur l'arbre d'entraînement menant (2), et
dans lequel le système de blocage à serrage est débloqué lorsqu'un couple est appliqué par l'arbre d'entraînement menant (2) sur l'arbre d'entraînement mené (3),
dans lequel le système de blocage à serrage comporte au moins un élément de blocage (5), qui est agencé entre une première surface de serrage (6) de l'arbre d'entraînement menant (2) ou respectivement de l'arbre d'entraînement mené (3) et une deuxième surface de serrage (7.1, 7.2) de l'élément d'accouplement (4), et qui peut être transféré d'une position neutre, dans laquelle n'a lieu aucun serrage entre l'élément de blocage (5) et la première surface de serrage (6) ainsi que la deuxième surface de serrage (7.1, 7.2), à une position de blocage, dans laquelle a lieu un serrage automatique entre l'élément de blocage (5) et la première surface de serrage (6) ainsi que la deuxième surface de serrage (7.1, 7.2), de sorte que le système de blocage à serrage bloque,
**caractérisé en ce que** le système de blocage à serrage présente, en outre, une première surface d'accouplement (8) de l'arbre d'entraînement menant (2) respectivement de l'arbre d'entraînement mené (3), ainsi qu'une deuxième surface d'accouplement (9) de l'élément d'accouplement (4), qui est opposée à la première surface d'accouplement (8), la première surface de serrage (6) et la deuxième surface de serrage (7.1) étant orientées et configurées de façon telle, qu'elles s'éloignent l'une de l'autre dans la direction axiale de l'arbre d'entraînement menant (2) lorsque l'élément de blocage (5) se déplace entre la première et la deuxième surface de serrage, de la position neutre à la position de blocage, et la première surface d'accouplement (8) et la deuxième surface d'accouplement (9) étant orientées de manière telle, qu'elles se déplacent l'une vers l'autre dans la direction axiale de l'arbre d'entraînement menant (2) en parvenant en prise, lorsque l'élément de blocage (5) se déplace de la position neutre à la position de blocage.

2. Dispositif (1) selon la revendication 1, **caractérisé en ce que** l'élément d'accouplement (4) et l'arbre d'entraînement menant (2), respectivement l'arbre d'entraînement mené (3), sur lesquels se trouvent la première surface de serrage (6) et la première surface d'accouplement (8), sont serrés axialement l'un vers l'autre de manière telle, que la première surface de serrage (6) et la deuxième surface de serrage (7.1) soient précontraintes dans la direction axiale de l'arbre d'entraînement menant (2), contre l'élément de blocage (5) agencé entre elles.

3. Dispositif (1) selon la revendication 2, **caractérisé en ce que** l'élément d'accouplement (4) et l'arbre d'entraînement menant (2), respectivement l'arbre d'entraînement mené (3), sont serrés réciproquement au moyen d'un ressort (11), de préférence un ressort hélicoïdal (11), qui est agencé de manière concentrique aux deux pièces serrées réciproquement l'une contre l'autre.

4. Dispositif (1) selon la revendication 3, **caractérisé en ce que** le ressort (11) est agencé dans un alésage central (12) de l'une au moins des deux pièces serrées réciproquement l'une contre l'autre, une bille (13) étant montée entre au moins une extrémité du ressort (11) et l'élément d'accouplement (4) ou l'arbre d'entraînement menant (2), respectivement l'arbre d'entraînement mené (3).

5. Dispositif (1) selon l'une des revendications 1 à 4, **caractérisé en ce que** la première surface d'accouplement (8) et la deuxième surface d'accouplement (9) sont des surfaces coniques.

6. Dispositif (1) selon l'une des revendications 1 à 5, **caractérisé en ce que** l'élément de blocage (5) est une bille.

7. Dispositif (1) selon la revendication 6, **caractérisé en ce qu'**un premier point d'appui (16) entre l'élément de blocage (5) et l'arbre d'entraînement menant (2), respectivement l'arbre d'entraînement mené (3), et un deuxième point d'appui (17) entre l'élément de blocage (5) et l'élément d'accouplement (4), sont espacés l'un de l'autre dans la direction axiale de l'arbre d'entraînement menant (2).

8. Dispositif (1) selon la revendication 6 ou la revendication 7, **caractérisé en ce que** la première surface de serrage (6) et la deuxième surface de serrage (7.1, 7.2) sont formées au moins partiellement par des surfaces coniques, un rayon moyen de la première surface de serrage et/ou de la deuxième surface de serrage variant à partir de la position neutre du corps de blocage vers la position de blocage.

9. Dispositif (1) selon la revendication 8, **caractérisé en ce que** la première surface de serrage (6) et la deuxième surface de serrage (7.1, 7.2) sont réalisées en forme de V.

10. Dispositif (1) selon l'une des revendications 1 à 9, **caractérisé en ce que** le système de blocage à serrage peut bloquer dans les deux sens de rotation, la première surface de serrage (6) et la deuxième surface de serrage (7.1, 7.2) étant configurées de manière telle, que l'élément de blocage (5) peut se déplacer hors de la position neutre, en fonction du sens de rotation, soit dans une première position de blocage ou dans une deuxième position de blocage.

11. Dispositif (1) selon l'une des revendications 1 à 10, **caractérisé en ce que** sont prévus plusieurs éléments de blocage (5) et de manière correspondante, plusieurs premières et deuxièmes surfaces de serrage (6, 7.1, 7.2).

12. Dispositif (1) selon l'une des revendications 1 à 11, **caractérisé en ce que** le système de blocage à serrage agit entre l'élément d'accouplement (4) et l'arbre d'entraînement mené (3), la première surface de serrage (6) et la première surface d'accouplement (8) se trouvant sur l'arbre d'entraînement mené (3).

13. Dispositif (1) selon l'une des revendications 1 à 12, **caractérisé en ce que** l'élément d'accouplement (4) est un élément de transmission, de préférence une roue dentée d'une transmission.

14. Transmission comprenant un dispositif (1) selon la revendication 13, **caractérisée en ce que** le système de blocage à serrage forme un blocage de transmission de ladite transmission.

15. Système d'entraînement comprenant un moteur électrique auquel est adjointe une transmission selon la revendication 14.
